# EUROPÄISCHE PATENTANMELDUNG

(11) **EP 0 596 367 A1**
(43) Veröffentlichungstag der Anmeldung: **11.05.1994**
(21) Anmeldenummer: 93117261.3
(22) Anmeldetag: 25.10.1993
(51) Int. Cl.: H01M 8/04

(54) **Brennstoffzellenblock und Verfahren zur Einstellung der Inertgasabfuhr aus dem Brennstoffzellenblock**

(30) Priorität: 05.11.1992 DE 4237413
(71) Anmelder: SIEMENS AKTIENGESELLSCHAFT, D-80333 München (DE)
(72) Erfinder: Bette, Willi, Dipl.-Ing., D-91056 Erlangen (DE); Lersch, Josef, Dipl.-Ing., D-91336 Heroldsbach (DE); Mattejat, Arno, Dr., D-91088 Bubenreuth (DE); Strasser, Karl, Dipl.-Ing., D-91058 Erlangen (DE)

(57) **Zusammenfassung**

Zur Entsorgung des Inertgasanteils eines anoden- oder kathodenseitigen Gasgemisches eines Brennstoffzellenblocks sind bisher stromabhängige Regelungen und Regelungsverfahren bekannt, die jedoch mit einem hohen Bauvolumen und -gewicht und hohen Installationskosten verbunden sind, was vermieden werden soll.

Hierzu ist es vorgesehen, aus einem die Brennstoffzellen (2, 4) kathoden- oder anodenseitig durchströmenden Gasgemisch (0₂, IG bzw. H₂, IG), bei dem sich ein fortschreitender Anstieg des Inertgasanteils (IG) ergibt in Abhängigkeit von einem Spannungsabfall (AU) Inertgas-angereichertes Gasgemisch abzulassen. Dabei wird der Spannungsabfall (AU) zwischen mindestens zwei unmittelbar benachbarten Brennstoffzellen (2, 4) gemessen. Hierdurch wird erreicht, daß eine verfahrenstechnisch einfach durchführbare und einfach installierbare Spannungsmessung zur Einstellung des aus dem Brennstoffzellenblock (1) auszutragenden Inertgasanteils (IG) des anoden- oder kathodenseitigen Gasgemisches (H₂, IG bzw. 0₂, IG) verwendet wird.

Das erfindungsgemäße Verfahren und der erfindungsgemäße Brennstoffzellenblock können prinzipiell bei allen Typen von Brennstoffzellen verwendet werden.

## Beschreibung

Die Erfindung bezieht sich auf einen Brennstoffzellenblock und ein Verfahren zur Einstellung der Inertgasabfuhr aus einem Brennstoffzellenblock mit einer Anzahl von Brennstoffzellen, bei dem sich ein fortschreitender Anstieg des Inertgasanteils in einem die Brennstoffzellen kathoden- oder anodenseitig durchströmenden Gasgemisch ergibt.

Eine Brennstoffzelle besteht im allgemeinen aus einer elektrisch leitenden Stromübertragerplatte, einer Kathode, einer Ionen leitenden Zwischenschicht, einer Anode und einer weiteren elektrisch leitenden Stromübertragerplatte, die in der genannten Reihenfolge als ebene Platten aufeinander gestapelt sind und eine Elektrolyt-Elektroden-Einheit bilden. Bei einer PEM-Brennstoffzelle wird die Elektrolyt-Elektroden-Einheit auch Membran-Elektroden-Einheit genannt, wobei PEM für Polymer-Elektrolyt-Membran oder Proton-Exchange-Membran steht.

Brennstoffzellen dieses Aufbaus sind u. a. durch das "Fuel Cell Handbook" von Appelby and Foulkes, New York, 1989 und durch den Aufsatz von K. Strasser "Die alkalische Siemens-Brennstoffzelle in Kompaktbauweise", VDI-Buch Nr. 0996, 1990, Seiten 25 bis 46, bekannt. Weil die Brennstoffzelle chemisch gebundene Energie unmittelbar in elektrische Energie umsetzen kann, ermöglicht sie es, Brennstoffe, wie z. B. Wasserstoff, Erdgas, Biogas, mit höherem Wirkungsgrad und mit geringerer Belastung für die Umwelt in elektrische Energie umzuwandeln, als es die bisher bekannten konventionellen Verbrennungskraftmaschinen, deren Wirkungsgrad durch den sogenannten Carnot'schen Prozeß begrenzt ist, zu tun vermögen.

Ein Brennstoffzellenblock ist aus abwechselnd aufeinander gestapelten Elektrolyt-Elektroden-Einheiten, Gasräumen, Kühleinheiten und Druckkissen aufgebaut. Zwischen diesen einzelnen Komponenten sind Dichtungen und eventuell Abstandshalter eingebaut. Hierbei können die Abstandshalter als bipolare Platten mit dazwischenliegenden Federblechen ausgestaltet sein. Die einzelnen Flüssigkeits-und Gasräume des Blocks werden von axialen Kanälen aus durch radiale Kanäle, die durch die Dichtungen verlaufen, versorgt. Ein solcher axialer Kanal verläuft hierbei senkrecht zur Ebene der übereinander gestapelten plattenförmigen Komponenten des Brennstoffzellenblocks. Ein solcher radialer Kanal verläuft entsprechend in der Plattenebene.

Beim Betrieb des Brennstoffzellenblocks, insbesondere bei einem aus PEM-Brennstoffzellen gebildeten Block, besteht bei einer anodenseitigen Versorgung mit technisch reinem Wasserstoff und bei einer kathodenseitigen Versorgung mit technisch reinem Sauerstoff das Problem, daß Wasser, welches infolge der elektrochemischen Reaktion von Wasserstoff und Sauerstoff zu Wasser in den Brennstoffzellen entsteht, und Inertgase, wie z. B. Stickstoff, Kohlendioxid, Edelgase, die als Verunreinigungsbestandteile zu geringen Prozentanteilen in technisch reinen Gasen enthalten sind, aus den Brennstoffzellen abgeführt werden müssen.

Dieses Problem wurde bisher durch eine vom elektrischen Strom abhängige Regelung und eine Aufkonzentration der inerten Gase in Strömungsrichtung des anoden- oder kathodenseitigen Gasgemisches gelöst. Hierbei ist als Nachteil in Kauf zu nehmen, daß ein hoher Aufwand bezüglich der starkstromseitigen Verschaltung erforderlich ist. Die starkstromseitige Verschaltung eines solchen Brennstoffzellenblockes ist voluminös, schwer und teuer, was insbesondere einer Massenanwendung der PEM-Brennstoffzelle, z. B. in Elektrofahrzeugen, entgegensteht.

Der Erfindung liegt daher die Aufgabe zugrunde, ein Verfahren der eingangs genannten Art und einen Brennstoffzellenblock anzugeben, die es erlauben, die Inertgasabfuhr in einfacher Weise unter Vermeidung der o. g. Nachteile durchzuführen.

Bezüglich des Verfahrens wird diese Aufgabe erfindungsgemäß dadurch gelöst, daß in Abhängigkeit von einem Spannungsabfall Inertgas-reiches Gasgemisch abgelassen wird, wobei der Spannungsabfall zwischen mindestens zwei unmittelbar benachbarten Brennstoffzellen gemessen wird.

Bezüglich des Brennstoffzellenblocks wird die Aufgabe erfindungsgemäß dadurch gelöst, daß zwischen mindestens zwei benachbarten Brennstoffzellen zwei beabstandete Kontakte an mindestens einer die Elektroden benachbarter Brennstoffzellen flächig kontaktierenden bipolaren Platte angeordnet sind, daß ein Stellglied für ein einen Gasraum verlassendes Gasgemisch mit einem hohen Anteil an Inertgas vorgesehen ist, und daß der an den Kontakten abgegriffene Spannungsabfall der Einstellung des Stellglieds dient.

Hierdurch wird erreicht, daß bei einer Veränderung der Reaktionsgaskonzentration entlang des Strömungsweges (Aufkonzentrationen der inerten Gasanteile und des Wassers) die dadurch bedingte Stromdichteverschiebung in radialer Richtung entlang der bipolaren Platte zur Einstellung der Inertgasabfuhr genutzt wird. Diese Stromdichteverschiebung äußert sich durch einen teilweise in radialer Richtung fließenden Strom zwischen mindestens zwei benachbarten Brennstoffzellen. Dabei fließt beispielsweise dieser Strom über die bipolare Platte, die zwischen zwei elektrisch in Reihe geschalteten aufeinander folgenden Brennstoffzellen eingebaut ist. Der Stromfluß in radialer Richtung erzeugt einen integral über der Platte in axialer Richtung abfallenden Spannungsabfall, der auf einfache Weise gemessen werden kann und mit dem in einfacher Weise ein elektrisches Signal zur Einstellung des Stellgliedes, über das das Inertgas-reiche Gasgemisch aus dem Brennstoffzellenblock ausgetragen wird, ableitbar ist.

In Ausgestaltung der Erfindung können die Kontakte zur Messung des Spannungsabfalls in axialem Abstand oder in axialem und radialem Abstand an der bipolaren Platte angeordnet sein. In all diesen Fällen mißt man den Spannungsabfall in radialen Strompfaden, in denen auch ein Teil des Gesamtstroms fließt, der durch die Asymmetrie der Stromdichteverteilung in den einzelnen Brennstoffzellen in radialer Richtung als Querstrom fließt.

Eine weitere vorteilhafte Ausgestaltung der Erfindung ergibt sich, wenn die anoden- und kathodenseitigen Gasräume benachbarter Brennstoffzellen dergestalt verbunden sind, daß die Strömungsrichtung des anoden- und des kathodenseitigen Gasgemisches in den Gasräumen benachbarter Brennstoffzellen gegensinnig ist. Wegen der entgegengesetzten Strömungsrichtung in zwei aufeinander folgenden und elektrisch in Reihe geschalteten Brennstoffzellen eignet sich dieser Aufbau zu einer besonders empfindlichen Einstellung der Abfuhr von Inertgas-reichem Gasgemisch, da der Spannungsabfall bei dieser Ausgestaltung relativ große absolute Werte erreichen kann.

Weitere vorteilhafte Ausgestaltungen der Erfindung sind den übrigen Unteransprüchen zu entnehmen.

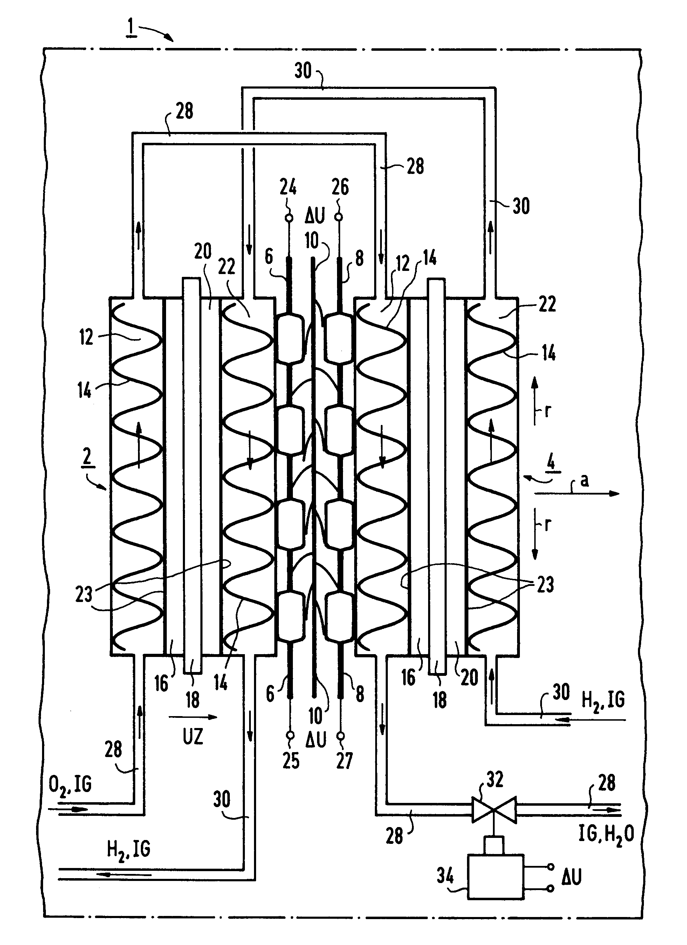

Ausführungsbeispiele der Erfindung werden im folgenden anhand einer Figur näher erläutert. Dabei zeigt die Figur einen Ausschnitt aus einem Brennstoffzellenblock mit einer Einrichtung zur Einstellung der Inertgasabfuhr.

In der Figur ist in schematischer Darstellung ein Ausschnitt aus einem Brennstoffzellenblock 1 gezeigt. In diesem Ausschnitt sind zwei Brennstoffzellen 2, 4 dargestellt, die über zwei bipolare Platten 6, 8 und ein zwischen den bipolaren Platten 6, 8 angeordnetes Federblech 10, bestehend aus einer Anzahl von federnden Kontaktzungen, elektrisch in Reihe geschaltet sind. Jede Brennstoffzelle 2, 4 umfaßt einen Kathodengasraum 12 mit Abstandshaltern 14, eine Kathode 16, eine Polymer-Elektrolyt-Membran (PEM) 18, eine Anode 20 und einen Anodengasraum 22 mit Abstandshaltern 14. Die Kathode 16 und die Anode 20 weisen jeweils auf der von der PEM 18 abgewandten Seite eine Stromübertragerplatte 23 auf, die beispielsweise eine Kohlepapierschicht ist. Die PEM 18 kann aus Polymermaterial, das z. B. unter den Handelsnamen "Nafion 115", "Nafion 117", "DOW XUS" im Handel erhältlich ist, bestehen. An den bipolaren Platten 6, 8 sind Kontakte 24, 25 bzw. 26, 27 angebracht, an denen die zwischen den Brennstoffzellen 2, 4 abfallende Spannung AU gemessen wird. Im gezeigten Ausführungsbeispiel wird der Spannungsabfall AU an den in axialer Richtung beabstandeten Kontakten 24, 26 abgegriffen. Der Spannungsabfall AU kann ebenso in vorteilhafter Weise an dem ebenfalls axial beabstandeten Kontaktpaar 25, 27 oder an einem der beiden radial und axial beabstandeten Kontaktpaare 24, 27 und 25, 26 abgegriffen werden. Die axiale Richtung ist mit a, zwei radiale Richtungen sind mit r bezeichnet.

Die Kathodengasräume 12 und die Anodengasräume 22 der Brennstoffzellen 2, 4 sind mittels jeweils eines eigenen Leitungssystems 28 bzw. 30 dergestalt miteinander verbunden, daß die Strömungsrichtung eines kathodenseitigen Gasgemisches 0₂, IG und eines anodenseitigen Gasgemisches H₂, IG in den Gasräumen jeder Zelle 2, 4 und den benachbarten Zellen 2, 4 gegensinnig ist. In das Leitungssystem 28 ist ausgangsseitig des Kathodengasraums 12 der Brennstoffzelle 4 als Stellglied ein Ventil 32 eingebaut, das mittels eines Einstellgliedes 34 eingestellt wird. Als Parameter zur Einstellung des Ventils 32 wird der Spannungsabfall AU verwendet, der an den Eingang des Einstellgliedes 34 angelegt ist.

Beim Betrieb des Brennstoffzellenblocks 1 erfolgt die Zuführung des anoden- und des kathodenseitigen Gasgemisches H₂, IG; 0₂, IG in vorteilhafter Weise auf gegenüberliegenden Seiten des Brennstoffzellenblocks 1. In dem gezeigten Ausschnitt aus dem Brennstoffzellenblock 1, der beispielsweise aus einer Anzahl von n = 70 elektrisch in Reihe geschalteten Brennstoffzellen 2, 4 besteht, entspricht im hier angenommenen Fall die Brennstoffzelle 2 der (n - 1)-ten oder vorletzten Brennstoffzelle und die Brennstoffzelle 4 der n-ten oder letzten Brennstoffzelle des Brennstoffblocks 1.

Dies bedeutet, daß über das Leitungssystem 30 eingangsseitig dem Anodengasraum 22 der Brennstoffzelle 4 frisches anodenseitiges Gasgemisch H₂, IG zugeführt wird. Das anodenseitige Gasgemisch ist im Ausführungsbeispiel technisch reines Wasserstoffgas H₂, das noch über einen Anteil an Inertgas IG von etwa 0,05 Vol.% verfügt. Das über das Leitungssystem 28 eingangsseitig dem Kathodengasraum 12 der Brennstoffzelle 2 zugeführte kathodenseitige Gasgemisch 0₂, IG hat bereits eine Anzahl von (n-2) in Strömungsrichtung vorgeschalteten Brennstoffzellen des Brennstoffzellenblocks 1 durchströmt. Infolge der elektrochemischen Reaktion von Wasserstoff H₂ und Sauerstoff 0₂ zu Wasser H₂0 in den Brennstoffzellen weist das in den Kathodengasraum 12 der Brennstoffzelle 2 einströmende kathodenseitige Gasgemisch, das ursprünglich technisch reines Sauerstoffgas 0₂ mit einem Anteil an Inertgas IG von etwa 0,5 Vol.% war, infolge des Aufbrauchs des Sauerstoffs 0₂ in den vorausgegangenen (n-2) Brennstoffzellen einen erheblichen Anteil an Wasser H₂0 und Inertgas IG auf. Hierdurch steht dem bereits stark mit Inertgas IG angereicherten kathodenseitigen Gasgemisch 0₂, IG, H₂0 in den Kathodengasräumen 12 der Brennstoffzellen 2, 4 ein beinahe noch unverbrauchtes anodenseitiges Gasgemisch H₂, IG in den Anodengasräumen 22 der Brennstoffzellen 2, 4 gegenüber.

Der Gasverbrauch der Brennstoffzelle 4 sorgt im Kathodengasraum 12 der Brennstoffzelle 2 für einen stetigen Gasfluß und eine leichte Aufkonzentration des Inertgasanteils in Strömungsrichtung. Bei geschlossenem Ventil 32 wird dem kathodenseitigen Gasgemisch 0₂, IG, das in den Kathodengasraum 12 der Brennstoffzelle 4 einströmt, der noch übrige Sauerstoff 0₂ entzogen. In Strömungsrichtung steigt deshalb im Kathodengasraum 12 der Brennstoffzelle 4 die Konzentration an Inertgas IG auf nahezu 100% an.

Diese Tatsache bedingt eine Verschiebung der elektrischen Stromdichte in radialer Richtung r, d. h. eine Abnahme der axialen Stromdichten in Strömungsrichtung des kathodenseitigen Gasgemisches. Wegen der entgegengesetzten Strömungsrichtung in den Gasräumen der benachbarten und elektrisch in Reihe geschalteten Brennstoffzellen 2, 4 fließt der von den Brennstoffzellen 2, 4 erzeugte elektrische Strom nicht ausschließlich in axialer Richtung a, sondern teilweise auch in radialer Richtung r. Dies äußert sich durch den Spannungsabfall AU zwischen den Brennstoffzellen 2, 4, der hier in der angegebenen Weise über den bipolaren Platten 6, 8 und dem Federblech 10 gemessen wird. Bezogen auf eine Spannung UZ der Brennstoffzellen 2, 4 von jeweils etwa 0,7 V kann dieser Spannungsabfall AU bei hohem Anteil an Inertgas IG bis zu 20 % der Zellspannung UZ erreichen. Typisch sind Spannungsabfälle U im Bereich zwischen 10 und 100 mV. Grundsätzlich ist der Spannungsabfall AU jedoch in weiten Grenzen einstellbar, was beispielsweise durch das Einsetzen von weiteren oder anders geformten Federblechen 10 oder aber anderen Zwischenlagen realisiert wird.

In Abhängigkeit von diesem Spannungsabfall ΔU, der mit ansteigendem Anteil an Inertgas IG und Wasser H₂0, d.h. mit dem Aufbrauch des Sauerstoffanteils 0₂, ansteigt, wird das Ventil 32 mittels des Einstellgliedes 34 eingestellt oder geführt. Bei geöffnetem Ventil 32 wird Inertgas-reiches Gasgemisch (hier kathodenseitig) aus dem Brennstoffzellenblock 1 ausgetragen. Der aus dem Brennstoffzellenblock 1 ausgetragene Teil des kathodenseitigen Gasgemisches, der zum größten Teil aus inerten Gasen, also Inertgas IG und Wasser H₂0, besteht, wird eingangsseitig des Brennstoffzellenblocks 1 durch frisches kathodenseitiges Gasgemisch 0₂,IG, hier technisch reines Sauerstoffgas, ersetzt. Bei geschlossenem Ventil 32 schreitet der Anstieg des Anteils an Inertgas IG und Wasser H₂0 infolge des Verbrauches von Sauerstoff 0₂ schnell voran.

Bei der Einstellung des Ventils 32 kann in zweierlei Weise vorgegangen werden. Einerseits kann das Einstellglied 34 ein Regler sein, der den Öffnungsgrad des Ventils 32 unmittelbar an die Differenz zwischen dem Spannungsabfall AU und einem Referenzwert anpaßt. Andererseits kann das Einstellglied 34 das Ventil 32 so steuern, daß das Ventil 32 nach Überschreiten einer vorgegebenen Schwellspannung von AU geöffnet wird und nach dem Durchlassen einer definierten Gasmenge (definierte Öffnungszeit) wieder geschlossen wird.

Der in der Figur gezeigte Aufbau zur Entsorgung des Anteils an Inertgas IG und Wasser H₂0 des kathodenseitigen Gasgemisches kann in gleicher Weise auch an der ersten (n = 1) und zweiten (n = 2) Brennstoffzelle des Brennstoffzellenblocks 1 installiert sein, um die Entsorgung des Anteils an Inertgas IG des anodenseitigen Gasgemisches H₂, IG zu gewährleisten.

In jedem Fall erspart die spannungsabhängige Einstellung der Wasser- und Inertgasentsorgung den großen Aufwand, der bisher bezüglich einer stromabhängigen Regelung aufgebracht werden mußte. Die damit verbundene Einsparung für einen Brennstoffzellenblock 1 mit einer elektrischen Leistung von 30 - 40 kW beträgt ca. 10% der Herstellungskosten. Besondere Bedeutung gewinnt dieser Vorteil bei einer Massenanwendung, wie z. B. in elektrisch angetriebenen Fahrzeugen. Neben dieser Kosteneinsparung wird auch ein erhebliches Volumen und Gewicht an Verschaltungseinrichtungen eingespart.

Grundsätzlich ist das Verfahren zur spannungsabhängigen Einstellung der Wasser- und Inertgasentsorgung aus einem Brennstoffzellenblock 1 nicht auf die Anwendung von PEM-Brennstoffzellen begrenzt, sondern kann ebenso bei allen anderen Brennstoffzellentypen, z.B. bei Brennstoffzellen mit anderen Protonen-, mit Hydroxidionen- oder mit Sauerstoffionen-leitenden Elektrolyten, verwendet werden.

Ebenso können auch Vorteile durch die Anwendung des Verfahrens erzielt werden, wenn der Brennstoffzellenblock 1 gemäß der Figur dahingehend abgewandelt wird, daß an mehreren Stellen innerhalb des Brennstoffzellenblocks 1 die zwischen mindestens zwei benachbarten Brennstoffzellen abfallende Spannung AU gemessen wird und auch an mehreren Stellen Ventile 32 zum Ablassen von Inertgas-haltigem Gasgemisch vorgesehen sind.

In der Figur erfolgt die Zuführung des anoden-und des kathodenseitigen Gasgemisches auf gasseitig entgegengesetzten Seiten des Brennstoffzellenblocks 1. Dabei ist die Strömungsrichtung des anoden- und des kathodenseitigen Gasgemisches sowohl innerhalb der einzelnen Brennstoffzellen 2, 4 als auch in bezug auf benachbarte Brennstoffzellen gegensinnig gewählt. Dies stellt die derzeit am meisten bevorzugte Ausführungsform dar. Alternative Ausführungen ergeben sich, wenn
a) die Strömungsrichtung des anodenseitigen und des kathodenseitigen Gasgemisches innerhalb der einzelnen Brennstoffzellen 2, 4 gleichsinnig, aber in bezug auf benachbarte Brennstoffzellen 2, 4 gegensinnig gewählt ist; oder wenn
b) die Strömungsrichtung des anodenseitigen und des kathodenseitigen Gasgemisches innerhalb der einzelnen Brennstoffzellen 2, 4 gegensinnig, aber in bezug auf benachbarte Brennstoffzellen 2, 4 gleichsinnig gewählt ist; oder wenn
c) die Strömungsrichtung des anodenseitigen und des kathodenseitigen Gasgemisches sowohl innerhalb der einzelnen Brennstofzellen 2, 4 als auch in bezug auf benachbarte Brennstoffzellen 2, 4 gleichsinnig gewählt ist.

## Patentansprüche

1. Verfahren zur Einstellung der Abfuhr von Inertgas (IG, H₂0) aus einem Brennstoffzellenblock (1) mit einer Anzahl von Brennstoffzellen (2, 4), bei dem sich ein fortschreitender Anstieg des Inertgasanteils (IG) in einem die Brennstoffzellen (2, 4) kathoden- oder anodenseitig durchströmenden Gasgemisch (0₂, H₂0, IG bzw. H₂, IG) ergibt, dadurch gekennzeichnet, daß in Abhängigkeit von einem Spannungsabfall (AU) Inertgas-reiches Gasgemisch (IG) abgelassen wird, wobei der Spannungsabfall (AU) zwischen mindestens zwei unmittelbar benachbarten Brennstoffzellen (2, 4) gemessen wird.

2. Verfahren nach Anspruch 1, dadurch gekennzeichnet, daß der Spannungsabfall (AU) der beiden am Anfang und/oder am Ende des Brennstoffzellenblockes (1) gelegenen Brennstoffzellen (2, 4) gemessen wird.

3. Verfahren nach Anspruch 1 oder 2, dadurch gekennzeichnet, daß bei zwei unmittelbar benachbart angeordneten Brennstoffzellen (2, 4) die beiden Anodengasräume (22) und die beiden Kathodengasräume (12) gegensinnig durchströmt werden, und daß die Gasräume (12, 22) einer jeden Brennstoffzelle (2, 4) gegensinnig durchströmt werden.

4. Brennstoffzellenblock (1) mit einer Anzahl von Brennstoffzellen (2, 4), dadurch gekennzeichnet, daß zwischen mindestens zwei benachbarten Brennstoffzellen (2, 4) zwei beabstandete Kontakte (24, 25, 26, 27) an mindestens einer die Elektroden (16, 20) benachbarter Brennstoffzellen (2, 4) flächig kontaktierenden bipolaren Platte (6, 8) angeordnet sind, daß ein Stellglied (32) für ein einen Gasraum (12, 22) verlassendes Gasgemisch mit einem hohen Anteil an Inertgas (IG) vorgesehen ist, und daß der an den Kontakten (24-27) abgegriffene Spannungsabfall (AU) der Einstellung des Stellgliedes (32) dient.

5. Brennstoffzellenblock (1) nach Anspruch 4, dadurch gekennzeichnet, daß zwischen zwei Brennstoffzellen (2, 4) zwei miteinander in elektrischem Kontakt stehende bipolare Platten(6, 8) angeordnet sind.

6. Brennstoffzellenblock (1) nach Anspruch 5, dadurch gekennzeichnet, daß die beiden bipolaren Platten (6, 8) mittels eines Federbleches (10) elektrisch leitend verbunden sind.

7. Brennstoffzellenblock (1) nach einem der Ansprüche 4 bis 6, dadurch gekennzeichnet, daß die Kontakte (24, 26; 25, 27) in axialem Abstand zwischen den zwei Brennstoffzellen (2, 4) angeordnet sind.

8. Brennstoffzellenblock (1) nach einem der Ansprüche 4 bis 7, dadurch gekennzeichnet, daß die Kontakte (24-27) in axialem und radialem Abstand zwischen den zwei Brennstoffzellen (2, 4) angeordnet sind.

9. Brennstoffzellenblock (1) nach einem der Ansprüche 4 bis 8, dadurch gekennzeichnet, daß das Stellglied (32) ausgangsseitig an den in Strömungsrichtung des Gasgemisches (0₂, IG; H₂, IG) zuletzt angeordneten Gasraum (12, 22) aller Brennstoffzellen (2, 4) angeschlossen ist.

10. Brennstoffzellenblock (1) nach einem der Ansprüche 4 bis 9, dadurch gekennzeichnet, daß das Stellglied (32) ausgangsseitig an den in Strömungsrichtung des Gasgemisches zuletzt angeordneten Gasraum (22) derjenigen Brennstoffzellen (2, 4) angeschlossen ist, zwischen denen der Spannungsabfall (AU) abgegriffen ist.

11. Brennstoffzellenblock (1) nach einem der Ansprüche 4 bis 10, dadurch gekennzeichnet, daß die Anoden- und Kathodengasräume (22, 12) benachbarter Brennstoffzellen (2, 4) dergestalt verbunden sind, daß die Strömungsrichtung des anoden- und des kathodenseitigen Gasgemisches (H₂, IG; 0₂, IG) in den Gasräumen (22, 12) benachbarter Brennstoffzellen (2, 4) gegensinnig ist.

12. Brennstoffzellenblock (1) nach einem der Ansprüche 4 bis 10, dadurch gekennzeichnet, daß die Strömungsrichtung des anoden- und des kathodenseitigen Gasgemisches (H₂, IG; 0₂, IG) in den Gasräumen (22, 12) benachbarter Brennstoffzellen (2, 4) gleichsinnig ist.

13. Brennstoffzellenblock (1) nach einem der Ansprüche 4 bis 12, dadurch gekennzeichnet, daß die Strömungsrichtung des anoden- und des kathodenseitigen Gasgemisches (H₂, IG; 0₂, IG) in jeder Brennstoffzelle (2, 4) gegensinnig ist.

14. Brennstoffzellenblock (1) nach einem der Ansprüche 4 bis 12, dadurch gekennzeichnet, daß die Strömungsrichtung des anoden- und des kathodenseitigen Gasgemisches (H₂, IG; 0₂, IG) in den Gasräumen (12, 22) jeder Brennstoffzelle (2, 4) gleichsinnig ist.

15. Brennstoffzellenblock (1) nach einem der Ansprüche 4 bis 14, dadurch gekennzeichnet, daß die Brennstoffzellen (2, 4) derart an Gasversorgungsleitungen (28, 30) für das anoden-und das kathodenseitige Gasgemisch (H₂, IG; 0₂, IG) angeschlossen sind, daß die Brennstoffzellen (2, 4) gasseitig in Reihe geschaltet sind, und daß von der einen Seite das eine Gasgemisch (H₂, IG) und von der anderen Seite das andere Gasgemisch (0₂, IG) einleitbar ist.
